# FASCICULE DE BREVET EUROPEEN

(11) **EP 1 642 164 B1**
(45) Date de publication et mention de la délivrance du brevet: **10.10.2007**
(21) Numéro de dépôt: 04766125.1
(22) Date de dépôt: 02.07.2004
(51) Int. Cl.: G02B 27/14, G02B 27/00, G03B 21/00, G02B 6/42

(54) **SYSTEME D`ECLAIRAGE PERMETTANT DE COMBINER PLUSIEURS FAISCEAUX LUMINEUX**
BELEUCHTUNGSSYSTEM, DAS EINE KOMBINATION MEHRERER LICHTSTRAHLEN ERMÖGLICHT
LIGHTING SYSTEM ENABLING COMBINATION OF SEVERAL LIGHT BEAMS

(30) Priorité: 03.07.2003 FR 0308083
(43) Date de publication de la demande: 05.04.2006
(73) Titulaire: Thomson Licensing, 92100 Boulogne (FR)
(72) Inventeur: SACRE, Jean-Jacques, F-35410 CHATEAUGIRON (FR); BENOIT, Pascal, F-35340 LIFFRE (FR)
(74) Mandataire: Browaeys, Jean-Philippe
(86) Numéro de dépôt international: PCT/EP2004/051350
(87) Numéro de publication internationale: WO 2005/012979

(56) Documents cités:
- DE-C- 19 937 417
- FR-A- 2 718 535
- US-A- 5 504 544
- US-A1- 2001 048 562
- US-B1- 6 341 876

## Description

L'invention concerne un système d'éclairage optique d'un objet et notamment un système permettant d'illuminer un dispositif de modulation spatial de lumière dans un appareil de projection ou de rétroprojection d'images. L'invention concerne également un projecteur ou un rétroprojecteur mettant en oeuvre un tel système d'éclairage

Dans la technique de projection, on peut avoir besoin d'éclairer un même modulateur spatial de lumière à l'aide de plusieurs sources de lumière. Cela peut être le cas, par exemple, lorsqu'on veut utiliser des lampes de puissances limitées ou lorsqu'on veut utiliser des lampes dont les spectres d'émission de lumière se complètent. Il faut alors combiner les faisceaux émis par ces sources pour transmettre un faisceau d'éclairage unique au modulateur.

On connaît différents systèmes tel que celui décrit dans le brevet US 6224217 (voir figure 1) les faisceaux de deux sources de lumières sont réfléchis selon une même direction par deux surfaces réfléchissantes telles que les faces externes d'un prisme. Cependant, dans un tel système, il est difficile d'obtenir un recouvrement total des deux faisceaux recombinés et d'obtenir un faisceau unique présentant un éclairage uniforme.

D'autres systèmes tel que celui décrit dans le brevet US 5504544 (voir figure 2) prévoit un réseau de prismes éclairé par deux faisceaux lumineux collimatés. La lumière de chaque faisceau pénètre dans chaque prisme par une face du prisme et est réfléchie sur une autre face du prisme par réflexion interne sur cette autre face. L'ensemble des prismes du réseau permet ainsi de combiner les deux faisceaux selon une même direction. Ce système nécessite un réseau prismatique qui est un composant coûteux. De plus, l'homogénéité d'éclairage du faisceau obtenu en sortie du réseau de prismes est tributaire de l'homogénéité des faisceaux fournis par les sources lumineuses.

Les documents US6341876 et US2001/048562 décrivent un composant optique de combinaison et d'intégration de faisceaux comprenant, de l'amont vers l'aval :
- en amont, au moins un prisme, délimité par une première face, dite d'entrée, et une deuxième face, qui forment un dièdre, la face d'entrée recevant un des faisceaux provenant des sources, qui pénètre dans le prisme puis est réfléchi au moins partiellement par réflexion interne sur la deuxième face,
- en aval, un dispositif intégrateur de lumière comprenant un barreau cylindrique en matériau transparent recevant à une extrémité dite d'entrée lesdits faisceaux réfléchis par l'au moins un prisme, la longueur du barreau étant telle que la lumière desdits faisceaux est réfléchie plusieurs fois sur les parois intérieures du barreau de façon à fournir à l'autre extrémité dite de sortie un faisceau d'éclairage quasiment homogène.

Les prismes peuvent être des pièces distinctes du barreau-intégrateur comme dans le document US6341876, ou être partie intégrante du barreau du système intégrateur comme dans le document US2001/048562.

Un inconvénient d'un tel composant optique de combinaison et d'intégration de faisceaux est qu'il nécessite un grand nombre de prismes, à savoir un par faisceau à combiner, ce qui devient encore plus gênant quand le nombre de faisceaux à combiner est supérieur à 2.

L'invention fournit un système d'éclairage permettant de résoudre les inconvénients précités.

L'invention concerne donc un système d'éclairage comprenant au moins deux sources lumineuses émettant des faisceaux lumineux non colinéaires et non colimatés, ainsi qu'un prisme délimité par au moins une première et une deuxième face d'entrée formant un dièdre et par une face de sortie. Chaque faisceau pénètre dans le prisme par une desdites faces d'entrée et est réfléchi au moins partiellement par réflexion interne sur l'autre dite face d'entrée vers la face de sortie. Le système comporte également un dispositif intégrateur de lumière couplé optiquement à ladite face de sortie et recevant par une face d'entrée lesdits faisceaux réfléchis par le prisme. La longueur du barreau est telle que la lumière desdits faisceaux est réfléchie plusieurs fois sur les parois intérieures du dispositif intégrateur de façon que celui-ci fournisse, par une face de sortie un faisceau d'éclairement quasiment homogène. Dans un tel système d'éclairage, l'au moins un prisme et le dispositif intégrateur sont des pièces distinctes.

Plus précisément, l'invention a pour objet un système d'éclairage comprenant au moins deux sources lumineuses émettant des faisceaux lumineux non colinéaires et non colimatés; un composant optique de combinaison et d'intégration de ces faisceaux, qui est placé sur le trajet de ces faisceaux, et qui comprend, de l'amont vers l'aval desdits trajets :
- en amont, au moins un prisme délimité par au moins une première et une deuxième face d'entrée formant un dièdre, chacun des faisceaux pénétrant par une des faces d'entrée puis étant réfléchi au moins partiellement par réflexion interne sur une autre des faces d'entrée,
- en aval, un dispositif intégrateur de lumière comprenant un barreau cylindrique en matériau transparent recevant à une extrémité dite d'entrée les faisceaux réfléchis par l'au moins un prisme, la longueur du barreau étant telle que la lumière de ces faisceaux est réfléchie plusieurs fois sur les parois intérieures du barreau de façon à fournir à l'autre extrémité dite de sortie un faisceau d'éclairage quasiment homogène le faisceau de toutes les sources pénétrant dans chaque prisme.

Dans ce dernier système d'éclairage, l'au moins un prisme et le barreau du dispositif intégrateur peuvent ne former qu'une seule même pièce. Chaque prisme, un au moins, combine donc tous les faisceaux émis par les sources, ce qui conduit à une réalisation plus simple et plus économique que celle décrite à la figure 7 du document US6341876 ou à la figure 1 du document US2001/048562 qui nécessite un prisme par source lumineuse ; dans le cas de trois sources lumineuses à combiner, par exemple trois sources de couleurs primaires différentes utilisables pour un appareil de projection ou de rétroprojection, grâce à l'invention, un seul prisme peut être utilisé, qui sera alors à base rectangulaire ou carrée ; ce même prisme pourrait même servir alors à combiner quatre sources. Ainsi, de préférence, le système d'éclairage comprend au moins trois sources lumineuses et/ou le composant optique ne comprend, en amont, qu'un seul prisme.

Par ailleurs, grâce à l'utilisation de faisceaux non colimatés, on obtient avantageusement de nombreuses réflexions sur les parois intérieures du barreau-intégrateur en aval, ce qui permet d'obtenir un faisceau d'éclairage plus homogène à l'autre extrémité même avec une longueur limitée. De préférence, l'ouverture de chaque faisceau est supérieure ou égale à 2.

De préférence, la disposition des sources, la géométrie et le matériau de l'au moins un prisme sont adaptés pour que les directions moyennes des différents faisceaux réfléchis par l'au moins un prisme soient sensiblement parallèles entre elles et parallèles à l'axe du cylindre du barreau du dispositif intégrateur, du moins à l'axe de ce cylindre au niveau de l'extrémité d'entrée du barreau. La géométrie mais aussi l'indice du matériau du prisme sont en effet déterminants pour l'orientation des faisceaux à la sortie du prisme.

Préférentiellement, la première et la deuxième face d'entrée de l'au moins un prisme forment entre elles un angle de sensiblement 60 degrés ; de préférence, en outre, le plan bissecteur de ces deux faces est parallèle à l'axe du cylindre du barreau du dispositif intégrateur.

De plus, on peut prévoir que chaque faisceau converge sensiblement sur l'extrémité d'entrée du dispositif intégrateur.

Ledit prisme peut avoir une forme pyramidale dont la face de sortie est un polygone régulier comportant un nombre pair de côté et dont les faces latérales servent de faces d'entrée.

Selon une variante on prévoit deux prismes de sections triangles rectangles. Une première face déterminant l'angle droit de chaque prisme est accolée à la face d'entrée du dispositif intégrateur. Les deuxièmes faces déterminant l'angle droit de chaque prisme enserrent un séparateur de faisceau.

L'invention est applicable à un appareil de projection ou de rétroprojection utilisant le système d'éclairage ainsi décrit. Un modulateur spatial de lumière est alors éclairé par la lumière transmise par la face de sortie du dispositif intégrateur.

Le modulateur spatial de lumière peut alors comporter une cellule à cristal liquide.

Les différents aspects et caractéristiques de l'invention apparaîtront plus clairement dans la description qui va suivre et dans les figures annexées qui représentent :
- les figures 1 et 2, des systèmes d'éclairage connus dans la technique et déjà décrit précédemment,
- les figures 3a à 3c, un exemple de réalisation d'un système d'éclairage selon l'invention,
- la figure 4, une variante du système de l'invention dans laquelle le prisme d'entrée comporte quatre faces d'entrée,
- la figure 5, une variante du système de l'invention comprenant deux prismes séparés par un élément séparateur de faisceaux.

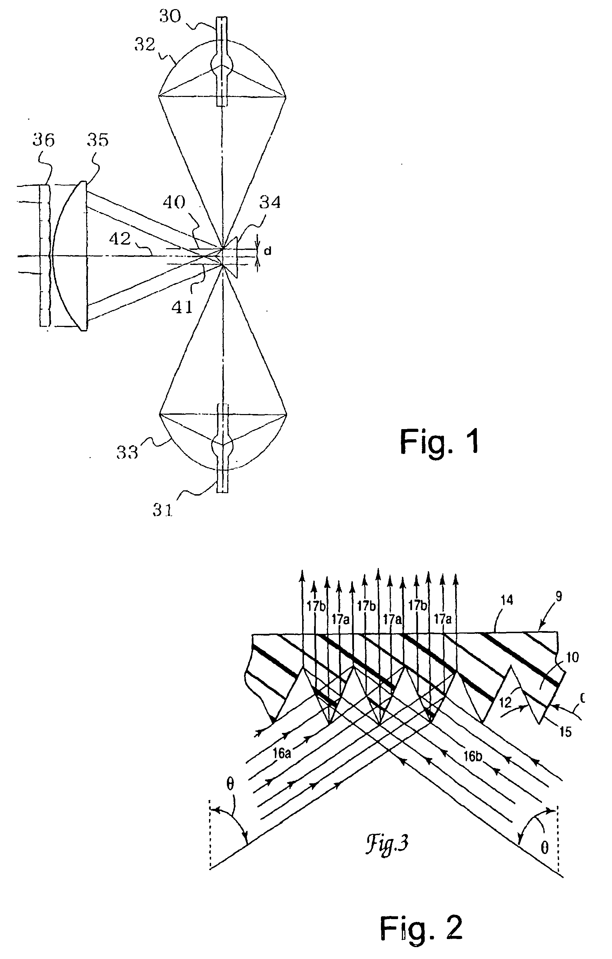

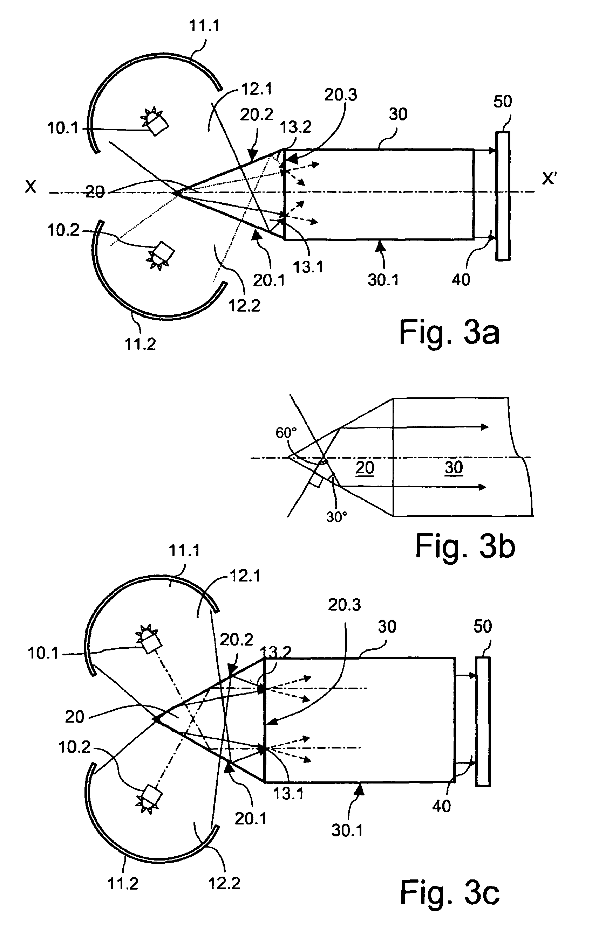

En se reportant à la figure 3a, on va donc décrire un exemple de réalisation d'un système d'éclairage selon l'invention.

Ce système comporte deux sources lumineuses 10.1-11.1 et 10.2-11.2 fournissant chacune un faisceau lumineux 12.1 et 12.2 non collimaté. Chaque faisceau est transmis à une face d'entrée d'un prisme 20 de telle façon qu'il pénètre à l'intérieur du prisme puis se réfléchisse sur une face opposée du prisme par réflexion interne. C'est ainsi que le faisceau 12.1 pénètre dans le prisme 20 par la face 20.2 et se réfléchit sur la face opposée 20.1. De même, le faisceau 12.2 pénètre dans le prisme par la face 20.1 et se réfléchit sur la face interne 20.2 opposée.

Les faisceaux réfléchis 13.1 et 13.2 sont transmis, par la face 20.3 du prisme, à un intégrateur optique 30 en forme de barreau ou de guide optique qui possède un axe de symétrie. La section droite de cet intégrateur peut être circulaire ou de forme polygonale.

Selon l'exemple de réalisation de la figure 3a l'axe de symétrie du barreau est aligné avec l'axe du prisme 20. Les faisceaux 13.1 et 13.2 sont focalisés sensiblement sur la face d'entrée de l'intégrateur optique 30 ou, pour le moins, les enveloppes des faisceaux à l'entrée de l'intégrateur sont telles que la totalité des faisceaux pénètre dans l'intégrateur. Les faisceaux 13.1 et 13.2 pénètrent donc dans le barreau où ils subissent des réflexions multiples sur les parois internes 30.1 du barreau. Il ressortent en suite par la face de sortie 30.2 sous la forme d'un faisceau 40 unique et homogène pour éclairer un objet 50, par exemple un modulateur spatial de lumière.

Il est bien évident que sans sortir du cadre de l'invention, il est possible de prévoir entre la face de sortie 30.2 de l'intégrateur et l'objet 50, une optique permettant d'adapter la taille du faisceau 40 à la surface de l'objet à éclairer.

Selon l'exemple de réalisation de la figure 3a, la face d'entrée du barreau intégrateur est plaquée à la base du prisme qui sert de face de sortie du prisme.

L'angle au sommet du prisme et les angles d'incidence des faisceaux sur les faces des prismes 20.1 et 20.2 sont tels que les axes des faisceaux 13.1 et 13.2 réfléchis par les faces 20.1 et 20.2 forment un angle relativement faible voire nul avec l'axe du prisme et du barreau intégrateur. Les sources 10.1-11.1 et 10.2-11.2 sont disposées symétriquement par rapport à l'axe XX' du prisme et éclairent sous la même incidence les faces 20.1 et 20.2.

Selon un mode de réalisation préféré de l'invention, les faisceaux qui pénètrent dans l'intégrateur 30 ont une direction parallèle à l'axe de symétrie de l'intégrateur. Le schéma de principe de la figure 3b démontre alors que si les faisceaux fournis par les sources de lumière sont perpendiculaires aux faces d'entrée du prisme, et si on veut, de façon certaine que les faisceaux 13.1 et 13.2 transmis à l'intégrateur soient parallèles, il convient que d'avoir un prisme dont les faces d'entrée 20.1 et 20.2 font entre elles un angle de 60°. La figure 3c représente alors un système d'éclairage selon l'invention dans lequel les faisceaux entrant dans l'intégrateur ont des directions parallèles à l'axe de l'intégrateur. Ce mode de réalisation est donc un mode préférentiel.

Sans sortir du cadre de l'invention, on pourrait avoir des modes de réalisation dans lesquels les directions des faisceaux d'entrée 12.1 et 12.2 dans les prismes ne seraient pas perpendiculaires aux faces d'entrée 20.1 et 20.2 des prismes du moment que l'incidence des rayons les plus inclinés de ces faisceaux soit inférieure à l'angle limite au dessus duquel il y aurait réflexion sur les faces d'entrée. Egalement, on pourrait avoir des modes de réalisation dans lesquels l'angle entre les faces 20.1 et 20.2 serait différent de 60°.

De même, sur la figure 3c, on a représenté les faisceaux focalisés sur la face d'entrée du barreau intégrateur, mais cela n'est pas obligatoire. Il suffit que l'enveloppe de chaque faisceau soit, après traversée du prisme, contenue dans le barreau intégrateur.

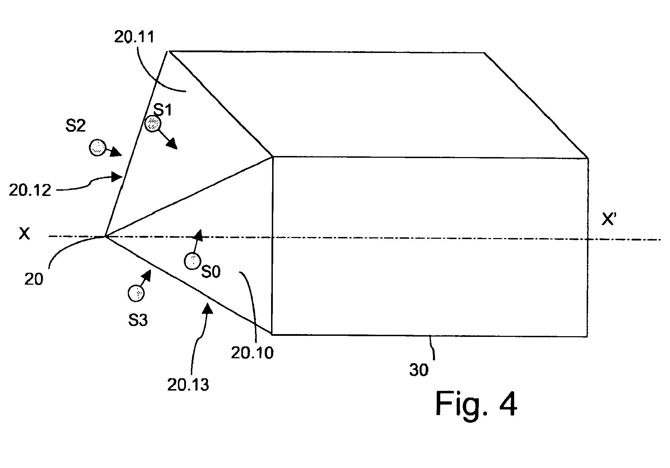

Sur les figures 3a à 3c, le prisme 20 possède deux faces d'entrée 20.1 et 20.2, ce qui permet de combiner deux faisceaux en un seul faisceau d'éclairage. Selon une variante de l'invention représentée en figure 4, le prisme 20 peut être un prisme de forme pyramidale dont la base est un polygone régulier possédant un nombre pair de côtés. Un tel prisme d'entrée permettra de combiner plus de deux faisceaux d'entrée. Selon l'exemple de la figure 4, la base peut être un carré. Dans ce cas, le prisme possède quatre faces d'entrée 20.10 à 20.13. Cette configuration permet d'injecter dans le prisme, et donc dans l'intégrateur, la lumière de quatre sources lumineuses S0 à S3. La lumière de la source S0 pénètre dans le prisme par la face 20.10 et se réfléchit sur la face 20.12 (non visible sur la figure) symétrique de la face 20.10 par rapport à l'axe XX'. La lumière de la source S1 pénètre dans le prisme par la face 20.11 et se réfléchit sur la face 20.13, etc.

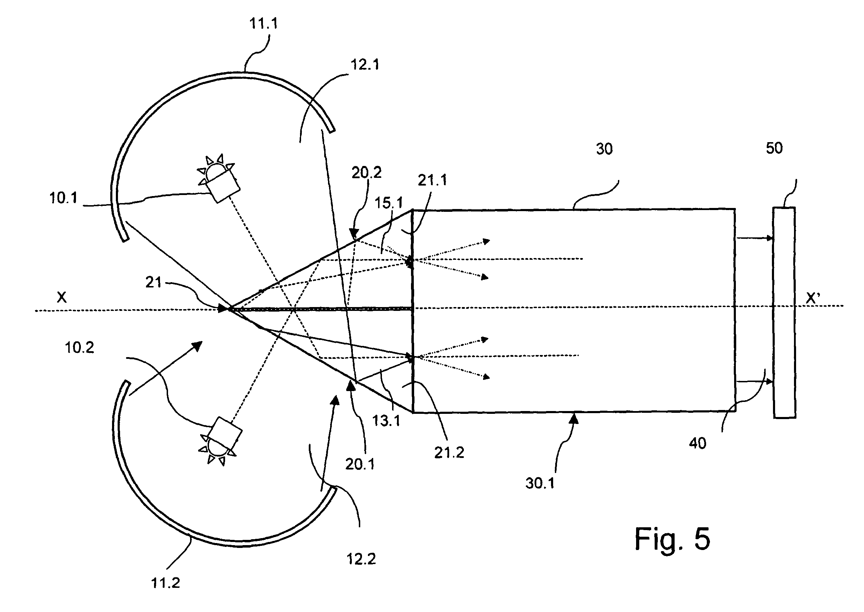

La figure 5 représente une variante de réalisation de l'invention dans laquelle le prisme 20 est séparé en deux prismes rectangles 21.1 et 21.2 par une lame (ou couche) séparatrice de faisceau 22 positionnée selon l'axe XX' de l'intégrateur 30. Les deux prismes 21.1 et 21.2 sont accolés à la face d'entrée de l'intégrateur par l'une de leurs faces formant l'angle droit des prismes tandis qu'il sont accolés par les autres faces formant cet angle droit avec le séparateur 22 situé entre ces deux faces. Les faces hypoténuses des prismes forment les faces d'entrée 20.1 et 20.2 des prismes.

Le faisceau de lumière 12.1 émis par la source lumineuse 10.1-11.1 pénètre dans le prisme 21.1 par la face 20.2. Une première partie de ce faisceau est transmise par le séparateur à la face 20.1 du prisme 21.2 qui réfléchit la lumière reçue sous la forme du faisceau 13.1 qui pénètre dans l'intégrateur 30 comme cela a été décrit précédemment. Une deuxième partie du faisceau 12.1 est réfléchie par le séparateur 22 vers la face 20.2 du prisme 21.1 qui réfléchit la lumière reçue sous la forme d'un faisceau 15.1 qui pénètre alors dans l'intégrateur 30. Celui-ci reçoit ainsi la lumière émise par la source 10.1-11.1 sous la forme de deux faisceaux 13.1 et 15.1 ce qui permet d'obtenir une meilleure homogénéité du faisceau 40 en sortie de l'intégrateur.

Sur la figure 5, on n'a représenté que la marche du faisceau lumineux 12.1 émis par la source de lumière 10.1-11.1. La marche du faisceau émis par la source lumineuse 10.2-11.2 est symétrique de celle décrite précédemment. On peut néanmoins préciser que le faisceau 12.2 émis par la source 10.2-11.2 sera séparé en deux parties par le séparateur 22. Si les deux sources lumineuses sont disposées symétriquement par rapport au plan contenant le séparateur 22 et si les deux prismes sont parallèles à ce plan, la partie du faisceau qui est transmise par le séparateur se superposera à la partie (en pointillés sur la figure 4) du faisceau 12.1 réfléchie par le séparateur et se combinera au faisceau 15.1. La partie du faisceau 12.2 réfléchie par le séparateur se superposera à la partie du faisceau 12.1 transmise par le séparateur et sera combinée avec celle-ci dans le faisceau 13.1.

La lumière des deux sources lumineuses est donc répartie par les prismes 21.1 et 21.2 sur les parties supérieure et inférieure de la face d'entrée de l'intégrateur 30.

Cette disposition permet ainsi d'améliorer l'homogénéité du faisceau de sortie 40 et cela est d'autant plus intéressant que les lampes des sources lumineuses peuvent avoir des caractéristiques spectrales différentes. De plus, en cas où l'une des lampes ne fournirait plus de faisceau lumineux, le système pourra conserver son homogénéité d'éclairage.

L'invention s'applique également aux cas où le ou les prismes forment une seule pièce avec le barreau du système intégrateur. L'invention s'applique tout particulièrement aux cas de systèmes d'éclairage comprenant plus de deux sources lumineuses et permet avantageusement de diminuer le nombre de prismes nécessaires pour la combinaison des faisceaux.

L'invention est donc applicable à un projecteur (ou un rétroprojecteur) pouvant être représenté de façon schématique comme en figure 5. L'objet 50 est alors un modulateur spatial de lumière tel qu'une cellule à cristal liquide. Le système doit alors être complété de manière connue en soi par une optique de projection permettant de projeter sur un écran l'image résultant de la modulation de la lumière transmise par le dispositif intégrateur au modulateur spatial de lumière 50.

## Revendications

1. Système d'éclairage comprenant au moins deux sources lumineuses (10.1-11.1 et 10.2-11.2) émettant des faisceaux lumineux (12.1, 12.2) non colinéaires et non colimatés; un composant optique de combinaison et d'intégration desdits faisceaux, qui est placé sur le trajet desdits faisceaux, comprenant, de l'amont vers l'aval desdits trajets :
- en amont, au moins un prisme (20) délimité par au moins une première et une deuxième face d'entrée (20.1, 20.2) formant un dièdre, l'une au moins des faces d'entrée (20.1, 20.2) recevant un desdits faisceaux qui pénètre dans le prisme puis est réfléchi au moins partiellement par réflexion interne sur une autre desdites faces d'entrée,
- en aval, un dispositif (30) intégrateur de lumière comprenant un barreau cylindrique en matériau transparent recevant à une extrémité dite d'entrée lesdits faisceaux réfléchis par l'au moins un prisme (20), la longueur du barreau étant telle que la lumière desdits faisceaux est réfléchie plusieurs fois sur les parois intérieures (30.1) dudit barreau de façon à fournir à l'autre extrémité dite de sortie un faisceau d'éclairage (40) quasiment homogène,
**caractérisé en ce que** le faisceau de toutes les sources pénètre dans chaque prisme.

2. Système d'éclairage selon la revendication 1, **caractérisé en ce que** la disposition desdites sources, la géométrie et le matériau de l'au moins un prisme sont adaptés pour que les directions moyennes des différents faisceaux réfléchis par l'au moins un prisme (20) soient sensiblement parallèles entre elles et parallèles à l'axe du cylindre du barreau du dispositif intégrateur (30).

3. Système d'éclairage selon la revendication 1 ou 2 **caractérisé en ce qu'**il comprend au moins trois sources lumineuses.

4. Système d'éclairage selon l'une quelconque des revendications précédentes **caractérisé en ce que** ledit composant optique ne comprend, en amont, qu'un seul prisme.

5. Système d'éclairage selon l'une quelconque des revendications précédentes, **caractérisé en ce que** la première et la deuxième face d'entrée (20.1, 20.2) de l'au moins un prisme forment entre elles un angle de sensiblement 60 degrés et **en ce que** le plan bissecteur de ces deux faces est parallèle à l'axe du cylindre du barreau du dispositif intégrateur (30).

6. Système d'éclairage selon l'une quelconque des revendications précédentes, **caractérisé en ce que** chaque faisceau (12.1, 12.2) converge sensiblement sur l'extrémité d'entrée du dispositif intégrateur.

7. Système d'éclairage selon la revendication 1, **caractérisé en ce que** ledit composant optique comporte en amont deux prismes (21.1, 21.2) de sections triangles rectangles, une première face déterminant l'angle droit de chaque prisme qui est accolée à l'extrémité d'entrée du dispositif intégrateur (30), les deuxièmes faces déterminant l'angle droit de chaque prisme et enserrant un séparateur de faisceau (22).

8. Appareil de projection ou de rétroprojection comprenant le système d'éclairage selon l'une des revendications précédentes, **caractérisé en ce qu'**il comporte un modulateur spatial de lumière éclairé par la lumière transmise par l'extrémité de sortie (20.3) du dispositif intégrateur.

9. Appareil de projection ou de rétroprojection selon la revendication 8, **caractérisé en ce que** le modulateur spatial de lumière comporte une cellule à cristal liquide.

## Claims

1. An illumination system comprising at least two light sources (10.1-11.1 and 10.2-11.2) emitting noncollinear and noncollimated light beams (12.1, 12.2), an optical component for combining and integrating said beams, which is placed in the path of said beams, comprising, from the upstream end of said paths to the downstream end:
- upstream, at least one prism (20) bounded by at least first and second entrance faces (20.1, 20.2) that form a dihedron, at least one of the entrance faces (20.1, 20.2) receiving one of said beams, which penetrates the prism and is then at least partly reflected by internal reflection on another of said entrance faces; and
- downstream, a light integrator (30) comprising a cylindrical rod made of transparent material, which receives at one end, called the entrance end, said beams reflected by at least one prism (20), the length of the rod being such that the light of said beams is reflected several times on the inside walls (30.1) of said rod so as to deliver at the other end, called the exit end, an almost uniform illumination beam (40),
**characterized in that** each beam from all of the sources penetrates each prism.

2. The illumination system as claimed in claim 1, **characterized in that** the arrangement of said sources and the geometry and material of at least one prism are adapted so that the average directions of the various beams reflected by at least one prism (20) are approximately parallel to one another and parallel to the axis of the cylinder of the rod of the integrator (30).

3. The illumination system as claimed in either of claims 1 and 2, **characterized in that** it includes at least three light sources.

4. The illumination system as claimed in any one of the preceding claims, **characterized in that** said optical component comprises, upstream, only a single prism.

5. The illumination system as claimed in any one of the preceding claims, **characterized in that** the first and second entrance faces (20.1, 20.2) of at least one prism make an angle of approximately 60 degrees between them and **in that** the bisector plane of these two faces is parallel to the axis of the cylinder of the rod of the integrator (30).

6. The illumination system as claimed in any one of the preceding claims, **characterized in that** each beam (12.1, 12.2) converges substantially on the entrance end of the integrator.

7. An illumination system according to claim 1, **characterized in that** said optical component comprises, upstream, two prisms (21.1, 21.2) having right-angled triangular cross sections, a first face determining the right angle of each prism being cemented to the entrance end of the integrator (30), and the second faces determining the right angle of each prism enclosing a beam splitter (22).

8. A projection or backprojection apparatus comprising the illumination system as claimed in one of the preceding claims, **characterized in that** it includes a spatial light modulator illuminated by the light transmitted via the exit end (20.3) of the integrator.

9. The projection or backprojection apparatus as claimed in claim 8, **characterized in that** the spatial light modulator comprises a liquid-crystal cell.

## Patentansprüche

1. Beleuchtungssystem mit mindestens zwei Lichtquellen (10.1-11.1 und 10.2-11.2), die nicht kolineare und nicht kollimierte Lichtstrahlen (12.1, 12.2) aussenden, einer optischen Komponente zum Kombinieren und Integrieren der Strahlen, welche in dem Gang der Strahlen angeordnet ist und von vorne nach hinten in den Strahlengängen Folgendes aufweist:
- vorne mindestens ein Prisma (20), das von mindestens einer ersten und einer zweiten Eintrittsfläche (20.1, 20.2), die ein V bilden, begrenzt ist, wobei mindestens die eine der Eintrittsflächen (20.1, 20.2) einen der Strahlen aufnimmt, der in das Prisma eindringt und anschließend mindestens teilweise durch interne Reflexion an einer anderen der Eintrittsflächen reflektiert wird,
- hinten eine Lichtintegrationsvorrichtung (30) mit einem zylindrischen Stab aus einem durchsichtigen Material, der an einem so genannten Eintrittsende die von dem mindestens einen Prisma (20) reflektierten Strahlen aufnimmt, wobei die Länge des Stabs derart ist, dass das Licht der Strahlen mehrmals an den Innenwänden (30.1) des Stabs derart reflektiert wird, dass an dem anderen so genannten Austrittsende ein nahezu homogener Beleuchtungsstrahl (40) bereitgestellt wird,
**dadurch gekennzeichnet, dass** der Strahl aller Quellen in jedes Prisma eindringt.

2. Beleuchtungssystem nach Anspruch 1, **dadurch gekennzeichnet, dass** die Anordnung der Quellen, die Geometrie und das Material des mindestens einen Prismas abgestimmt sind, damit die mittleren Richtungen der einzelnen, von dem mindestens einen Prisma (20) reflektierten Strahlen weitestgehend parallel zueinander und parallel zu der Achse des Zylinders des Stabs der Integrationsvorrichtung (30) verlaufen.

3. Beleuchtungssystem nach Anspruch 1 oder 2, **dadurch gekennzeichnet, dass** es mindestens drei Lichtquellen umfasst.

4. Beleuchtungssystem nach einem der vorhergehenden Ansprüche, **dadurch gekennzeichnet, dass** die optische Komponente vorne lediglich ein einziges Prisma umfasst.

5. Beleuchtungssystem nach einem der vorhergehenden Ansprüche, **dadurch gekennzeichnet, dass** die erste und die zweite Eintrittsfläche (20.1, 20.2) des mindestens einen Prismas miteinander einen Winkel von im Wesentlichen 60 Grad bilden und dass die winkelhalbierende Ebene dieser zwei Flächen parallel zu der Achse des Zylinders des Stabs der Integrationsvorrichtung (30) verläuft.

6. Beleuchtungssystem nach einem der vorhergehenden Ansprüche, **dadurch gekennzeichnet, dass** jeder Strahl (12.1, 12.2) im Wesentlichen am Eintrittsende der Integrationsvorrichtung konvergiert.

7. Beleuchtungssystem nach Anspruch 1, **dadurch gekennzeichnet, dass** die optische Komponente vorne zwei Prismen (21.1, 21.2) mit Querschnitten in Form eines rechtwinkligen Dreiecks aufweist, wobei eine erste Fläche, die an dem Eintrittsende der Integrationsvorrichtung (30) anliegt, den rechten Winkel jedes Prismas bestimmt, wobei die zweiten Flächen den rechten Winkel jedes Prismas bestimmen und einen Strahlteiler (22) umschließen.

8. Projektions- bzw. Rückprojektionsgerät mit dem Beleuchtungssystem nach einem der vorhergehenden Ansprüche, **dadurch gekennzeichnet, dass** es einen räumlichen Lichtmodulator aufweist, der von dem Licht beleuchtet wird, das von dem Austrittsende (20.3) der Integrationsvorrichtung übertragen wird.

9. Projektions- bzw. Rückprojektionsgerät nach Anspruch 8, **dadurch gekennzeichnet, dass** der räumliche Lichtmodulator eine Flüssigkristallzelle aufweist.
